# EUROPEAN PATENT APPLICATION

(11) **EP 2 838 003 A1**
(43) Date of publication of application: **18.02.2015**
(21) Application number: 14178752.3
(22) Date of filing: 28.07.2014
(51) Int. Cl.: G06F 3/0482, G06F 3/0488

(54) **User interaction and display of tree hierarchy data on limited screen space**

(30) Priority: 07.08.2013 US 201361863094 P
(71) Applicant: Siemens Product Lifecycle Management Software Inc., Plano, TX 75024-6612 (US)
(72) Inventor: McMinn, Matthew, Clio, MI Michigan 48420 (US); Menyhart, Istvan, West Chester, OH Ohio 45150 (US); Rezayat, Mohsen, Terrace Park, OH Ohio 45174 (US)
(74) Representative: Maier, Daniel Oliver

(57) **Abstract**

Systems and methods for displaying tree hierarchy data on limited screen space and interacting with users. A method includes displaying multi-level data (405) from a tree data structure (250) to a user on the data processing system display (100), wherein the multi-level data is displayed using colored vertical lines (202) or other visual indicators to represent parent-child relationships in the tree data structure. The method includes receiving (410) a user input (314) and re-displaying the multi-level data (415) from the tree data structure according to the user input.

## Description

### TECHNICAL FIELD

The present disclosure is directed, in general, to computer systems and interfaces, including but not limited to computer-aided design, visualization, and manufacturing systems, product lifecycle management ("PLM") systems, and similar systems, that manage data for products and other items (collectively, "Product Data Management" systems or PDM systems).

### BACKGROUND OF THE DISCLOSURE

PDM systems manage PLM and other data. Improved systems are desirable.

### SUMMARY OF THE DISCLOSURE

Various disclosed embodiments include systems and methods for displaying tree hierarchy data on limited screen space and interacting with users. Other systems and methods are disclosed. A method includes displaying multi-level data from a tree data structure to a user on the data processing system display, wherein the multi-level data is displayed using visual indicators, such as colored vertical lines, to represent parent-child relationships in the tree data structure. The method includes receiving a user input and re-displaying the multi-level data from the tree data structure according to the user input.

The foregoing has outlined rather broadly the features and technical advantages of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiment disclosed as a basis for modifying or designing other structures for carrying out the same purposes of the present disclosure. Those skilled in the art will also realize that such equivalent constructions do not depart from the spirit and scope of the disclosure in its broadest form.

Before undertaking the DETAILED DESCRIPTION below, it may be advantageous to set forth definitions of certain words or phrases used throughout this patent document: the terms "include" and "comprise," as well as derivatives thereof, mean inclusion without limitation; the term "or" is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, whether such a device is implemented in hardware, firmware, software, or some combination of at least two of the same. It should be noted that the functionality associated with any particular controller may be centralized or distributed, whether locally or remotely. Definitions for certain words and phrases are provided throughout this patent document, and those of ordinary skill in the art will understand that such definitions apply in many, if not most, instances to prior as well as future uses of such defined words and phrases. While some terms may include a wide variety of embodiments, the appended claims may expressly limit these terms to specific embodiments.

### BRIEF DESCRIPTION OF THE DRAWINGS

For a more complete understanding of the present disclosure, and the advantages thereof, reference is now made to the following descriptions taken in conjunction with the accompanying drawings, wherein like numbers designate like objects, and in which:
Figure 1 illustrates a block diagram of a data processing system in which an embodiment can be implemented;
Figure 2A illustrates one example of a user interface in accordance with disclosed embodiments;
Figure 2B illustrates a tree data structure corresponding to Fig. 2A in a more conventional tree view;
Figure 3 illustrates the use of user input gestures to interact with an interface in accordance with disclosed embodiments; and
Figure 4 illustrates a flowchart of a process in accordance with disclosed embodiments.

### DETAILED DESCRIPTION

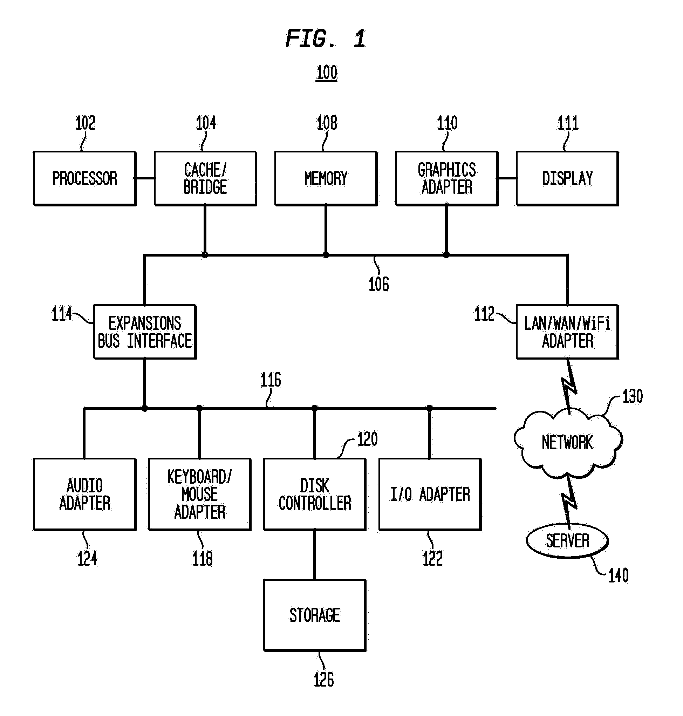

FIGURES 1 through 4, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged device. The numerous innovative teachings of the present application will be described with reference to exemplary non-limiting embodiments.

Existing GUI controls for displaying tree structures are not suited for use when screen space is limited. This is because these traditional tree view controls rely on using a great deal of horizontal indentation space between the different levels of the tree to visually represent the tree structure in a way that is apparent to the user looking at it. The controls for expanding and collapsing these traditional tree view controls, usually clickable plus (+) and minus (-) buttons, also adds to the use of horizontal space. This approach cannot be used when horizontal screen space is limited. Furthermore, the current GUIs are not touch friendly, meaning that they have limited touch interaction capabilities.

Some controls for expanding and collapsing "traditional" tree view can be implemented by clickable plus (+) and minus (-) buttons that add to the use of horizontal space. This approach cannot be used when horizontal screen space is limited. Tree view controls often use a great amount of horizontal indentation space to properly display tree structures, which is particularly unworkable on small screens.

Disclosed embodiments include a tree structure user interface that works equally well on any size device and provides the ability for full touch manipulation. Disclosed embodiments are optimal for showing tree-structured data using as little horizontal space as possible for each indentation level, while still maintaining the ability of the user to fully visualize the tree hierarchy.

Figure 1 illustrates a block diagram of a data processing system in which an embodiment can be implemented, for example, as a system particularly configured by software or otherwise to perform the processes as described herein, and in particular as each one of a plurality of interconnected and communicating systems as described herein. While this exemplary embodiment describes some hardware elements that can be used to implement disclosed techniques, specific embodiments contemplate that data processing system 100 is implemented as a mobile device such as a tablet computer, smartphone, or similar device.

The data processing system depicted includes a processor 102 connected to a level two cache/bridge 104, which is connected in turn to a local system bus 106. Local system bus 106 may be, for example, a peripheral component interconnect (PCI) architecture bus. Also connected to local system bus in the depicted example are a main memory 108 and a graphics adapter 110. The graphics adapter 110 may be connected to display 111.

Other peripherals, such as local area network (LAN) / Wide Area Network / Wireless (*e.g.* WiFi) adapter 112, may also be connected to local system bus 106. Expansion bus interface 114 connects local system bus 106 to input/output (I/O) bus 116. I/O bus 116 is connected to keyboard/mouse adapter 118, disk controller 120, and I/O adapter 122. Disk controller 120 can be connected to a storage 126, which can be any suitable machine usable or machine readable storage medium, including but not limited to nonvolatile, hard-coded type mediums such as read only memories (ROMs) or erasable, electrically programmable read only memories (EEPROMs), magnetic tape storage, and user-recordable type mediums such as floppy disks, hard disk drives and compact disk read only memories (CD-ROMs) or digital versatile disks (DVDs), and other known optical, electrical, or magnetic storage devices.

Also connected to I/O bus 116 in the example shown is audio adapter 124, to which speakers (not shown) may be connected for playing sounds. Keyboard/mouse adapter 118 provides a connection for a pointing device (not shown), such as a mouse, trackball, trackpointer, etc.

In many cases, the data processing system 100 as described herein can be a mobile device. In particular, display 111 can be a touch-screen display with a touch-screen interface, and function also as a pointing or input device for use with touch input or stylus input. Display 111 can also be connected to the I/O bus 116 directly or via the keyboard/mouse adapter 118 to enable user interaction and input.

Those of ordinary skill in the art will appreciate that the hardware depicted in Figure 1 may vary for particular implementations. For example, other peripheral devices, such as an optical disk drive and the like, also may be used in addition or in place of the hardware depicted. The depicted example is provided for the purpose of explanation only and is not meant to imply architectural limitations with respect to the present disclosure.

A data processing system in accordance with an embodiment of the present disclosure includes an operating system employing a graphical user interface. The operating system permits multiple display windows to be presented in the graphical user interface simultaneously, with each display window providing an interface to a different application or to a different instance of the same application. A cursor in the graphical user interface may be manipulated by a user through the pointing device. The position of the cursor may be changed and/or an event, such as clicking a mouse button, generated to actuate a desired response.

One of various commercial operating systems, such as a version of Microsoft Windows™, a product of Microsoft Corporation located in Redmond, Wash. may be employed if suitably modified. The operating system is modified or created in accordance with the present disclosure as described. In particular, "mobile" operating systems can be used, such as the iOS®, Andriod®, and other operating systems.

LAN/ WAN/Wireless adapter 112 can be connected to a network 130 (not a part of data processing system 100), which can be any public or private data processing system network or combination of networks, as known to those of skill in the art, including the Internet. Data processing system 100 can communicate over network 130 with server system 140, which is also not part of data processing system 100, but can be implemented, for example, as a separate data processing system 100.

Disclosed embodiments include systems and methods that implement a user interface that, among other advantages, can use thin colored lines (or other visual indicators) to visually represent tree structure to the user, which allows the use of the same representation on any device size. Disclosed embodiments can use gestures to collapse and expand nodes, eliminating the requirement for buttons with this functionality. Disclosed embodiments can use gestures on the tree view to directly manipulate the underlying tree structured data represented by the selected tree nodes. Disclosed embodiments can use transparency of the tree view when it is displayed in full screen to still be able to display the underlying tree structured data under the same screen space as the tree.

These features greatly reduce the amount of horizontal space required to visually represent the tree in a way that is still visually recognizable to the user. The visual indicators, such as colored lines, have the additional advantage of allowing the user to trace parent and child relationships to any level in the tree with greater ease than traditional tree view controls. Disclosed techniques work equally well in landscape and portrait modes of the various devices used to implement disclosed embodiments.

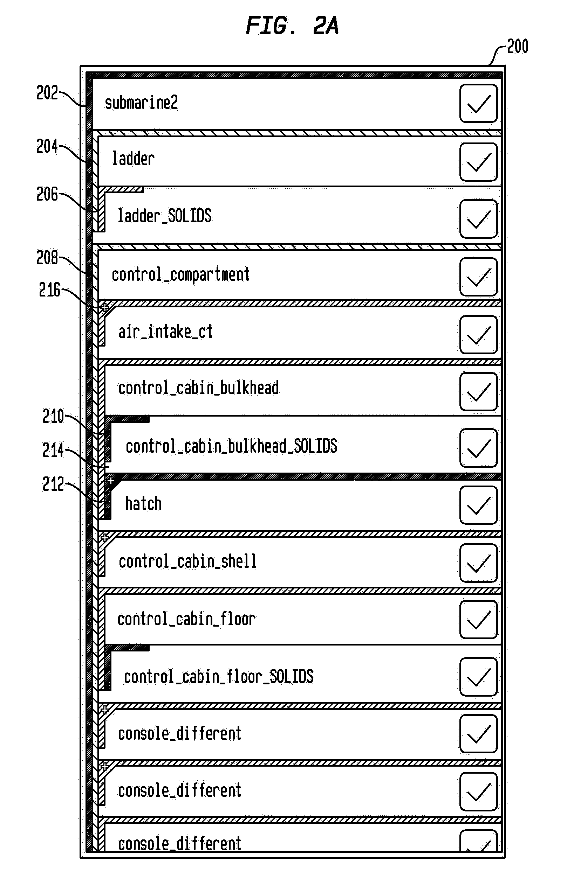

Figure 2A illustrates one example of a user interface 200 in accordance with disclosed embodiments, for example as may be displayed on the display of a smartphone, tablet, or other device with less screen area than a typical desktop or laptop computer. Of course, the same techniques can be used on larger displays, and can be particularly useful in a smaller "window" in a larger display. Such an interface is particularly useful in systems with a touch-screen interface to enable the user interactions described below.

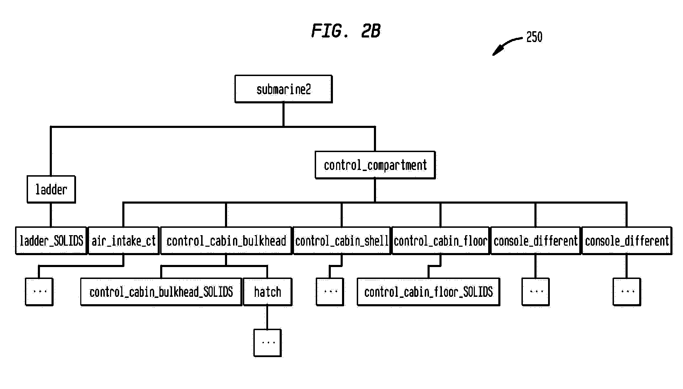

Figure 2B illustrates a tree data structure 250, corresponding to Fig. 2A, in a more conventional tree view. In Fig. 2B, boxes with ellipses represent nodes or subtrees that are not shown in Fig. 2A, but are indicated as present by "expand" indicators as described below. Note that it would be very difficult to display tree structure 250 effectively on any display with limited screen area. The tree data structure can be, for example, a product bill of materials (BOM) data structure, a data structure storing CAD data for a CAD model, or otherwise.

As illustrated in this example, disclosed techniques can use colored lines to visually represent a tree view structure in the display 200; visual indicators other than colored lines are contemplated, including but not limited to lines that are speckled, crosshatched, dotted, icons, etc., some of which may be used for illustration in the attached figures. Each horizontal line represents a node, and each vertical line extends to indicate the nodes or subtrees that descend from that node.

Any number of colors (or other visual indicators) may be specified. One implementation, for example, uses six unique colors. Once all colors in a color set are utilized, they can be repeated. While the limitations of this patent document prevent colors from being used in illustration, in the example of Fig. 2, lines 202 can be a first color and indicate a first level of the hierarchy. Lines 204 can be a second color and represent a second level of the hierarchy. Lines 206 can be a third color and represent a third level of the hierarchy. Lines 208, in this example, are also the second color, since they also represent the second level of the hierarchy. Lines 210 and 212 can be a third color and both represent a third level of the hierarchy.

The vertical portions of the lines represent the indentation level and hierarchy level, and start at a parent node (for example first-level hierarchy lines 202) and extend downward to encompass all descendent nodes of that parent, and so represent parent-child relationships in the corresponding tree data structure. Note that first-level hierarchy lines 202 extend to (and past) the bottom of interface 200, indicating that "submarine2" the hierarchy, corresponding to first-level hierarchy lines 202, is an ancestor node to all of the other elements shown in this example.

A line ending is made apparent by a small gap between the end and start of a new line at the same indentation level, such as gap 214. Such a gap indicates an end of that branch of the tree structure at that level of the hierarchy. That is, in this example, gap 214 after line 210 indicated that "control_cabin_bulkhead_SOLIDS" has no child nodes to be shown below it, as further indicated by the lack of an "expand" indicator and the short horizontal line portion, as described below.

The beginning of a hierarchical level grouping is made apparent where the vertical portion of the line is connected to a horizontal line at the top of the node, such as the horizontal line of lines 202 connects to the vertical line of lines 202.

A horizontal line for a node extends only part way if the node is a leaf node and has no further children, as illustrated by the horizontal line of lines 206 for the node "ladder_SOLIDS." If a node is not a leaf node and has children (either individual child nodes or subtrees), that node's horizontal line extends the full way across, as illustrated by the horizontal line of lines 204 for the node "ladder."

This combination of vertical and horizontal lines, in disclosed embodiments, allows the user to trace parent-child relationships between any level with much greater ease than traditional tree view GUIs, such as that shown in Fig. 2B, just by following the appropriately colored vertical line.

Disclosed embodiments can display "expand" indicators to indicate nodes that have child nodes or subtrees that are not currently displayed. For example, in Fig. 2A, small plus (+) sign is shown, as expand indicator 216, in the top left corner of nodes that have child nodes but are not expanded to show their children. Other "expand" indicators 216 can be used. For example, an expanded or connected corner area, such as that shown with plus sign, can be used to indicate the existence of child nodes that are not expanded (with or without the plus sign).

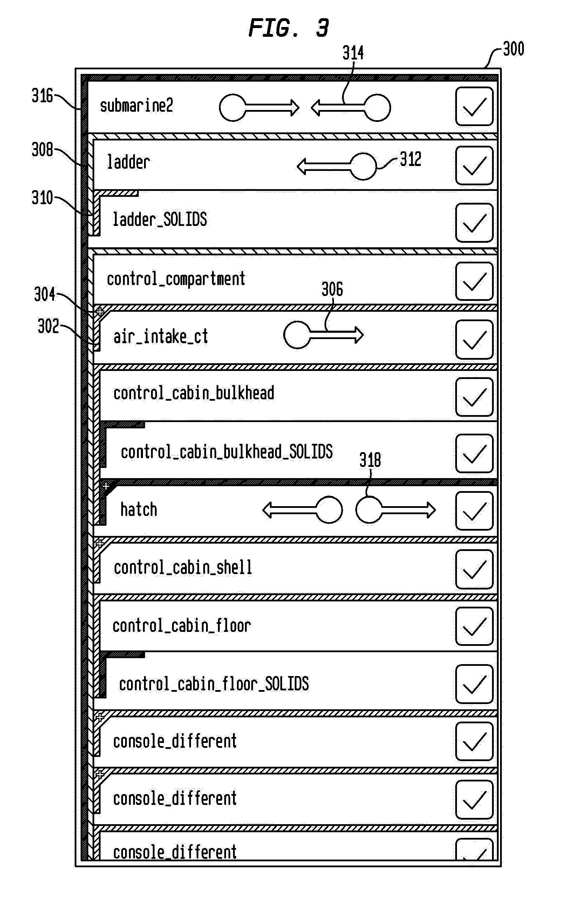

Figure 3 illustrates the use of user input "gestures" to interact with an interface 300 in accordance with disclosed embodiments.

Disclosed techniques can also interpret user gestures to collapse and expand nodes. These gestures are optimized for use on a touch enabled device, however, they are still possible to use with a mouse, touch pad, or other input device.

The system can interpret a "swipe right" on a non-expanded parent node to expand it and show its children. For example, node 302 is unexpanded, as indicated by expand indicator 304. A swipe right 306 (that is, a placement of the finger or stylus on node 302 then a drag to the right) is received by the system which expands node 302 to show its children.

The system can interpret a swipe left on an expanded parent node to collapse it and hide its children. For example, node 308 is expanded, as indicated by the display of its child node 310. A swipe left 312 is received by the system, which collapses node 308 to hide its child node 310.

The system can also interpret multiple-finger user gestures which may be primarily used on a multi-touch enabled device.

The system can interpret a "pinch closed" gesture, with an inward motion using two fingers, to collapse all nodes in the tree. For example, if the system receives a user input of a pinch closed 314 on node 316, the parent node of the entire displayed tree structure, the system collapses the entire tree structure to display only node 316. In various embodiments, the pinch closed gesture results in this collapse no matter where on the interface it is made. The "pinch closed" can be received in any orientation, not just the horizontal example illustrated.

The system can interpret a "pinch open" gesture 318, with an outward motion using two fingers, to expand all nodes in the tree. The "pinch open" can be received in any orientation, not just the horizontal example illustrated.

In some embodiments, the system can interpret user gestures on the tree view to directly manipulate the underlying tree structured data represented by the selected tree nodes. For example, in one implementation, selected nodes are highlighted in blue and the back text is replaced by white. Nodes are selected with a single tap gesture. Selected nodes can be deselected with another tap. Selecting multiple nodes at the same time is possible.

Gestures can be applied directly to all selected tree nodes, which allows for greater screen area on which to perform the gesture since the gesture can be performed anywhere on the tree view, instead of on a specific node. Various embodiments also allow for an action to be performed on multiple nodes at once with just a single gesture.

The use of gesture inputs as described herein eliminates need for additional menu or selection elements on the screen that would normally perform the actions the gestures perform, which can be important for smaller display sizes, and allows the user to manipulate the underlying tree structured data even in cases where more direct manipulation is not possible, such as when the tree view occupies the entire screen.

Various embodiments can uses transparency of the tree view when it is displayed full screen. For example, the underlying tree structured data can be displayed under the same screen space as the tree view. This allows the user to see the corresponding data and state changes as they manipulate the tree view. Displaying the tree view full screen can increase ease of use.

Disclosed embodiments are particularly advantageous for displaying deep tree-structured data on mobile devices. Because of the problems with traditional tree view GUIs, there are very few mobile applications that manage to successfully show deep tree structured data in a single view. This limits their usability and utility compared to desktop applications.

Disclosed embodiments are particularly useful for showing tree structured data using as little horizontal space as possible for each indentation level, while still maintaining the ability of the user to fully visualize the tree hierarchy. Up until now, traditional tree view controls have used much more horizontal indentation space to achieve the same goal.

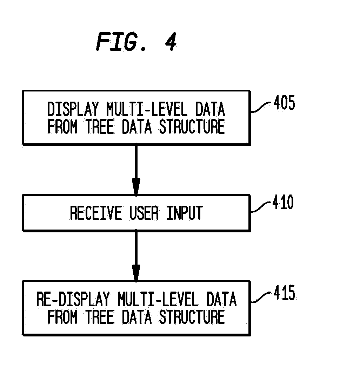

Figure 4 illustrates a flowchart of a process in accordance with disclosed embodiments. Disclosed embodiments include but are not limited to a method for interacting with a user that can be performed by a data processing system (generically the "system" below) configured to perform the processes described herein. In some embodiments, the system can be a smartphone, a tablet computer, a mobile device, a laptop computer, a desktop computer, or other device, and particularly such devices that use touch-screen inputs, which can include elements such as described with regard to data processing system 100. Disclosed embodiments include a data processing system configured to perform methods and processes as described herein.

The system can display multi-level data from a tree data structure, such as the exemplary tree structure 250, to a user on the data processing system display (405).

In some embodiments, the multi-level data is displayed using colored vertical lines to represent parent-child relationships in the tree data structure, such as illustrated in Fig. 2A. In some embodiments, vertical lines represent an indentation level or hierarchy level of respective nodes, and start at a parent node and extend downward to encompass all descendent nodes of that parent, a line ending is displayed as a small gap between the end and start of a new line at the same indentation level, a line beginning is displayed as connected to a horizontal line at the top of the node, and/or the horizontal line extends only part way if an associated node is a leaf node and has no children. In some embodiments, the horizontal line extends substantially or completely across the display when the associated node is not a leaf node and has children.

In some embodiments, a plus sign (+) is displayed as an expand indicator to represent parent nodes that have child nodes but are not expanded to show children of the parent nodes. For example, expand indicator 304 is shown in Fig. 3.

The system receives a user input (410). In some embodiments, the user input is received via a touch-screen input of the system display.

The system re-displays the multi-level data from the tree data structure according to the user input (415).

In some embodiments, the user input is a touch-screen gesture. In some embodiments, the user input is a right-swipe gesture, such as shown at 306 in Fig. 3, on a displayed non-expanded parent node that causes the data processing system to re-display the multi-level data by expanding the parent node and showing its child nodes. In some embodiments, the user input is a left-swipe gesture, such as shown at 312 in Fig. 3, on an expanded parent node that causes the data processing system to re-display the multi-level data by collapsing the parent node and hiding its child nodes.

In some embodiments, the data processing system is one of a smartphone, a tablet computer, a mobile device, a laptop computer, and a desktop computer. Disclosed embodiments include a data processing system configured to perform methods and processes as described herein.

The system can also display graphic or geometric models of parts, assemblies, or other items represented by the tree data structure, and can display the model and geometric properties of the selected part, assembly, or other item. Part and assembly visibility can be managed by toggling checkboxes, or otherwise, in the tree view disclosed herein, such as by tapping on the corresponding rows in the tree view. The state of the checkbox can be used to indicate whether the assembly is entirely visible, partially visible, or hidden. "Long-pressing" on a row of the tree view can be used, for example, as a user input to have the system display a context menu that provides access to part-sensitive commands. The system can maintain the tree view in sync with the visibility and selection state of the model, even when the tree view is hidden.

Of course, those of skill in the art will recognize that, unless specifically indicated or required by the sequence of operations, certain steps in the processes described above may be omitted, performed concurrently or sequentially, or performed in a different order.

Those skilled in the art will recognize that, for simplicity and clarity, the full structure and operation of all data processing systems suitable for use with the present disclosure is not being depicted or described herein. Instead, only so much of a data processing system as is unique to the present disclosure or necessary for an understanding of the present disclosure is depicted and described. The remainder of the construction and operation of data processing system 100 may conform to any of the various current implementations and practices known in the art.

It is important to note that while the disclosure includes a description in the context of a fully functional system, those skilled in the art will appreciate that at least portions of the mechanism of the present disclosure are capable of being distributed in the form of instructions contained within a machine-usable, computer-usable, or computer-readable medium in any of a variety of forms, and that the present disclosure applies equally regardless of the particular type of instruction or signal bearing medium or storage medium utilized to actually carry out the distribution. Examples of machine usable/readable or computer usable/readable mediums include: nonvolatile, hard-coded type mediums such as read only memories (ROMs) or erasable, electrically programmable read only memories (EEPROMs), and user-recordable type mediums such as floppy disks, hard disk drives and compact disk read only memories (CD-ROMs) or digital versatile disks (DVDs).

## Claims

1. A method for interacting with a user, the method performed by a data processing system (100) and comprising:
displaying multi-level data (405) from a tree data structure (250) to a user on a data processing system display (100), wherein the multi-level data is displayed using colored vertical lines (202) to represent parent-child relationships in the tree data structure;
receiving (410) a user input (314); and
re-displaying the multi-level data (415) from the tree data structure according to the user input.

2. The method of claim 1; or the data processing system of claim 8; or the computer-readable medium of claim 15, wherein the vertical lines (202) represent an indentation level and start at a parent node and extend downward to encompass all descendent nodes of that parent, a line ending is displayed as a small gap (214) between the end and start of a new line at the same indentation level, a line beginning is displayed as connected to a horizontal line at the top of the node, and the horizontal line (206) extends only part way if an associated node is a leaf node and has no children.

3. The method of claim 2, wherein the horizontal line (204) extends completely across the display when the associated node is not a leaf node and has children.

4. The method of anyone of claims 1 to 3, wherein an expand indicator (216, 304) is displayed to represent parent nodes that have child nodes but are not expanded to show children of the parent nodes.

5. The method of claim 4, wherein the expand indicator (216, 304) is a plus sign.

6. The method of anyone of claims 1 to 5, wherein the user input is a touch-screen gesture.

7. The method of anyone of claims 1 to 6, wherein the user input is a right-swipe gesture (306) on a displayed non-expanded parent node (302) that causes the data processing system to re-display the multi-level data by expanding the parent node and showing its child nodes and/or
wherein the user input is a left-swipe gesture (312) on an expanded parent node (308) that causes the data processing system to re-display the multi-level data by collapsing the parent node and hiding its child nodes.

8. A data processing system (100), comprising:
a processor (102);
an accessible memory (108); and
a touch-screen display (111), the data processing system configured to
display multi-level data (405) from a tree data structure (250) to a user on a data processing system display (100), wherein the multi-level data is displayed using colored vertical lines (202) to represent parent-child relationships in the tree data structure;
receive (410) a user input (314); and
re-display the multi-level data (415) from the tree data structure according to the user input.

9. The data processing system of claim 8, wherein the data processing system is one of a smartphone, a tablet computer, a mobile device, a laptop computer, or a desktop computer.

10. The data processing system of claims 8 and 2, wherein the horizontal line (204) extends completely across the display when the associated node is not a leaf node and has children.

11. The data processing system of anyone of claims 8 to 10, wherein an expand indicator (216, 304) is displayed to represent parent nodes that have child nodes but are not expanded to show children of the parent nodes.

12. The data processing system of claim 11, wherein the expand indicator (216, 304) is a plus sign.

13. The data processing system of anyone of claims 8 to 12, wherein the user input is a touch-screen gesture.

14. The data processing system of anyone of claims 8 to 13, wherein the user input is a right-swipe gesture (306) on a displayed non-expanded parent node (302) that causes the data processing system to re-display the multi-level data by expanding the parent node and showing its child nodes and/or
wherein the user input is a left-swipe gesture (312) on an expanded parent node (308) that causes the data processing system to re-display the multi-level data by collapsing the parent node and hiding its child nodes.

15. A non-transitory computer-readable medium (126) encoded with executable instructions that, when executed, cause a data processing system (100) to:
display multi-level data (405) from a tree data structure (250) to a user on a touch-screen display (111), wherein the multi-level data is displayed using colored vertical lines (202) to represent parent-child relationships in the tree data structure;
receive (410) a user input (314); and
re-display the multi-level data (415) from the tree data structure according to the user input.
